# EUROPEAN PATENT APPLICATION

(11) **EP 3 681 214 A1**
(43) Date of publication of application: **15.07.2020**
(21) Application number: 20151484.1
(22) Date of filing: 13.01.2020
(51) Int. Cl.: H04W 56/00, H04W 72/04

(54) **METHODS AND APPARATUS FOR INTER-NODE DISCOVERY AND MEASUREMENT SYNCHRONIZATION SIGNAL BLOCK CONFIGURATION IN INTEGRATED ACCESS AND BACKHAUL**

(30) Priority: 11.01.2019 GB 201900380
(71) Applicant: Samsung Electronics Co., Ltd., Gyeonggi-do 16677 (KR)
(72) Inventor: Qi, Yinan, Staines, Middlesex TW18 4QE (GB)
(74) Representative: Nederlandsch Octrooibureau

(57) **Abstract**

A pre-5th-Generation (5G) or 5G communication system for supporting higher data rates Beyond 4th-Generation (4G) communication system such as Long Term Evolution (LTE) is provided. The disclosure relates to a method of configuring a node in a telecommunication network, wherein the node is operable to perform Integrated Access and Backhaul (IAB), comprising the step of selectively muting one or more SSB transmissions, such that during the muting, the node is able to monitor an SSB transmission from another node.

## Description

### BACKGROUND

### 1. Field

The disclosure relates to improvements in relation to the configuration and operation of Integrated Access and Backhaul (IAB) capabilities in a telecommunication network. More particularly, the disclosure relates to New Radio (NR) or Fifth Generation (5G) systems.

### 2. Description of Related Art

To meet the demand for wireless data traffic having increased since deployment of 4^{th} generation (4G) communication systems, efforts have been made to develop an improved 5^{th} generation (5G) or pre-5G communication system. Therefore, the 5G or pre-5G communication system is also called a 'Beyond 4G Network' or a 'Post Long Term Evolution (LTE) System'.

The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems.

In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like.

In the 5G system, Hybrid frequency shift keying (FSK) and quadrature amplitude modulation (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have been developed.

The above information is presented as background information only to assist with an understanding of the disclosure. No determination has been made, and no assertion is made, as to whether any of the above might be applicable as prior art with regard to the disclosure.

### SUMMARY

Aspects of the disclosure are to address at least the above-mentioned problems and/or disadvantages and to provide at least the advantages described below. Accordingly, an aspect of the disclosure is to provide a method and apparatus for selectively muting one or more synchronization signal block (SSB) transmissions in a node.

Additional aspects will be set forth in part in the description which follows and, in part, will be apparent from the description, or may be learned by practice of the presented embodiments.

In accordance with an aspect of the disclosure, a method performed by a node in a telecommunication network is provided. The method includes selectively muting one or more synchronization signal block (SSB), transmissions; and monitoring an SSB transmission from another node.

In accordance with another aspect of the disclosure, an apparatus of a node in a telecommunication network is provided. The apparatus includes at least one processor configured to selectively mute one or more synchronization signal block (SSB), transmissions, and monitor an SSB transmission from another node.

Other aspects, advantages, and salient features of the disclosure will become apparent to those skilled in the art from the following detailed description, which, taken in conjunction with the annexed drawings, discloses various embodiments of the disclosure.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 shows coordinated Synchronization Signal Blocks (SSBs) within one SSB burst set for inter-node discovery, according to an embodiment of the disclosure;
FIG. 2 shows a muting scheme (across all IAB nodes), according to an embodiment of the disclosure;
FIG. 3 shows a muting scheme based on hop order, according to an embodiment of the disclosure; and
FIG. 4 shows a further a muting scheme based on hop order, according to an embodiment of the disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

IAB is a feature whereby the air interface between nodes or base stations is used to provide backhaul connectivity as well as access to User Equipment (UE). The configuration of such a system involves careful selection of signaling to ensure reliable and effective connectivity both between nodes and with UEs.

Certain network features have been agreed at a standardization level. These are summarized below and serve to provide background information for the disclosure.

Physical layer specification [RAN1-led, RAN2, RAN3, RAN4]:
Specification of Synchronization Signal Block (SSB)/ Remaining Minimum System Information (RMSI) periodicity for NR initial access assumed by an IAB-node.

Specification of extensions to Rel. 15 to support the use of SSBs orthogonal to SSBs used for UEs (via Time Division Multiplexing (TDM) and/or Frequency Division Multiplexing (FDM)), for inter-IAB-node discovery and measurements, including additional SSB-based Radio Resource Management (RRM) Measurement Timing Configuration (SMTC) periodicities and time-domain mapping of SSB locations (e.g. enable muting patterns to deal with half-duplex constraint).

Specification of extension of Random Access Channel (RACH) occasions and periodicities for backhaul RACH resources. w.r.t. access RACH resources, and associated network coordination mechanisms for selection of such parameters (in order to orthogonalize access and Backhaul (BH) due to the half-duplex constraints i.e. that nodes are unable to transmit and receive simultaneously).

Specification of mechanisms for resource multiplexing among backhaul and access links. This includes:
Specification of semi-static configuration for IAB-node/IAB-donor Distributed Unit (DU) resources in case of TDM operation subject to half-duplex constraint. This shall be forward compatible to allow the support of half-duplex scenarios with FDM and Spatial Division Multiplexing (SDM) resource sharing among backhaul and access links.
Specification of time resource types for the DU's child links: DL hard, DL soft, UL hard, UL soft, Flexible hard, Flexible soft, Not Available
Specification of dynamic indication (L1 signaling) of the availability of soft resources for a child IAB-node DU
Specification of required transmission/reception rules for IAB-nodes and associated behaviors regarding time resource utilization as discussed in TR 38.874 clause 7.3.3.

Specification of mechanism to support the "case-1" OTA timing alignment.

During SI, the following agreement was made in RAN1#94 and RAN1#95 as follows.

### Agreements:

Solution 1-B means SSB, that may get muted, for inter-IAB cell search and measurement in stage 2 is not on the currently defined sync raster for a SA frequency layer, while for a Non-standalone (NSA) frequency layer the SSBs are transmitted outside of the SMTC configured for access UEs

Solution 1-A means SSB for inter-IAB cell search in stage 2 is on the currently defined sync raster for a SA frequency layer, while for an NSA frequency layer the SSBs are transmitted inside of the SMTC configured for access UEs

### Agreements:

An IAB node should not mute SSB transmissions targeting UE cell search and measurement when doing inter-IAB cell search in stage 2
For Standalone (SA), means that SSBs transmitted on the currently defined sync raster follows the currently defined periodicity for initial access
Means that Solution 1-B implies SSB, that may get muted, for inter-IAB stage 2 cell search is at least TDM with SSB used for UE cell search and measurements

### Agreements:

Solution 1-A and Solution 1-B are both supported
Enhancements for off-raster SSB, e.g. new periodicities and time-domain mapping can be considered

### Agreements:

Capture the following conclusions for the IAB SI TR:
RANI has studied various physical layer aspects for Integrated Access and Backhaul, and from a RANI perspective, support for the following features and solutions has been determined to be beneficial and feasible:
Mechanisms for discovery of IAB nodes and management of backhaul links in both SA and NSA deployments, taking into account the half-duplex constraint at an IAB node and multi-hop topologies, including:
Solutions reusing the same set of SSBs used for access UEs and solutions which use of SSBs which are orthogonal (TDM and/or FDM) with SSBs used for access UEs
One of the main objectives for IAB is to provide RAN-based mechanisms to support dynamic route selection to accommodate short-term blocking and transmission of latency-sensitive traffic across BH links under half-duplex constraint. There are three RA (Resource Allocation) modes defined, namely TDM, FDM and SDM. No matter which RA scheme is applied, there always exists a problem for IAB node discovery and measurement, especially for mmWave where the links can be easily blocked. For the SSB based solution, it has been agreed that two sub-solutions will be supported:
- Solution 1-A) Reusing the same set of SSBs used for access UEs:
- In this case, the SSBs for inter-IAB cell search in stage 2 are on the currently defined sync raster for a SA frequency layer, while for an NSA frequency layer the SSBs are transmitted inside of the SMTC configured for access UEs.
- Solution 1-B) Use of SSBs which are orthogonal (TDM and/or FDM) with SSBs used for access UEs:
- In this case, the SSBs, that may get muted, for inter-IAB cell search and measurement in stage 2 are not on the currently defined sync raster for a SA frequency layer, while for an NSA frequency layer the SSBs are transmitted outside of the SMTC configured for access UEs.

Embodiments of the disclosure aim to address problems identified in the prior art, whether mentioned herein or not. In particular, embodiments of the disclosure aim to provide inter-node discovery and measurement techniques for IAB nodes subject to half-duplex constraint.

According to the disclosure there is provided an apparatus and method as set forth. Other features of the disclosure will be apparent from the description which follows.

According to the disclosure, there is provided a method of configuring a node in a telecommunication network, wherein the node is operable to perform Integrated Access and Backhaul (IAB), the method comprising selectively muting one or more synchronization signal block (SSB), transmissions, and during the muting, monitoring an SSB transmission from another node.

In an embodiment, one or more SSB transmissions are selectively muted on at least one of an individual SSB basis or a burst set basis.

In an embodiment, the one or more SSB transmissions are selectively muted in a complementary manner between the node and another node.

In an embodiment, the node and one or more neighboring nodes of the telecommunication network exchange SSB configuration information and adjust their SSB configurations accordingly.

In an embodiment, a donor or parent node of the telecommunication network provides an SSB configuration for all child nodes of the donor or parent node or for all next-level child nodes of the donor or parent node.

In an embodiment, the one or more SSB transmissions are selectively muted in the node in a collaborative manner between the node and any connected nodes.

In an embodiment, the one or more SSB transmissions are selectively muted in the node in a collaborative manner only between the node and other nodes in a same hop as the node.

In an embodiment, the one or more SSB transmissions are selectively muted based on a node topology and can be configured or reconfigured in a semi-persistent manner by upper layer signaling or in a dynamic manner.

In an embodiment, an SSB-based radio resource management (RRM) measurement timing configuration (SMTC) orthogonal to an access User Equipment SMTC (UE SMTC) is provided to allow the node to measure an SSB transmission of a neighboring node such that an additional SMTC is configured in both Radio Resource Control (RRC)-connected and RRC idle states.

In an embodiment, at least some of information included in a Physical Broadcast Channel (PBCH) is removed or muted from the one or more SSB transmissions.

In an embodiment, the node assumes an SSB configuration and an SSB measurement periodicity different from those assumed when accessing the network for a first time.

In an embodiment, the node is operable to perform the IAB with a state indicator to differentiate an IAB mobile terminal from an access user equipment (UE).

According to another aspect of the disclosure, there is provided apparatus to perform the method of the first aspect.

Although a few preferred embodiments of the disclosure have been shown and described, it will be appreciated by those skilled in the art that various changes and modifications might be made without departing from the scope of the disclosure, as defined in the appended claims.

For a better understanding of the disclosure, and to show how embodiments of the same may be carried into effect, reference will now be made, by way of example only, to the accompanying diagrammatic drawings in which:

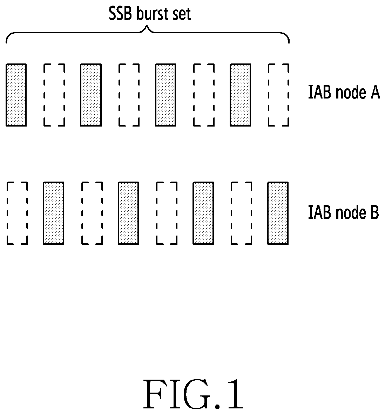

FIG. 1 shows coordinated SSBs within one SSB burst set for inter-node discovery, according to an embodiment of the disclosure.

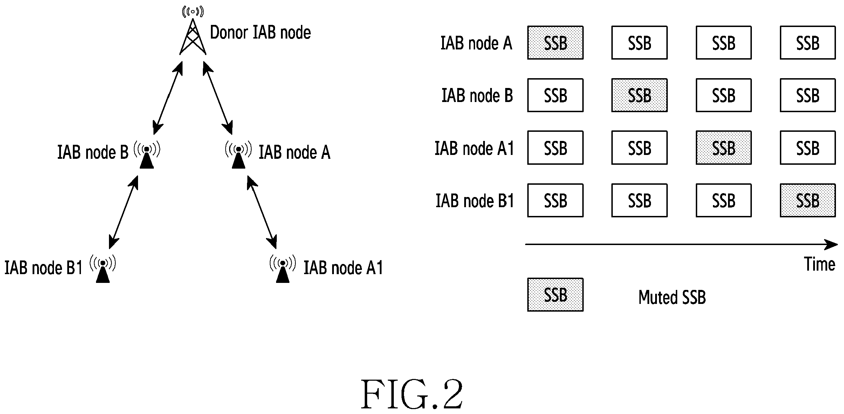

FIG. 2 shows a muting scheme (across all IAB nodes), according to an embodiment of the disclosure.

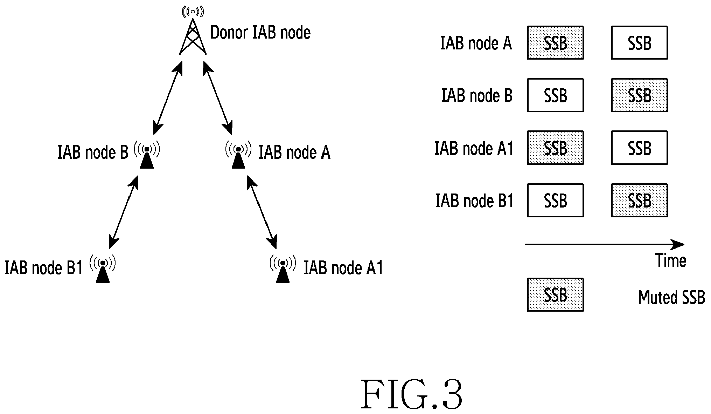

FIG. 3 shows a muting scheme based on hop order, according to an embodiment of the disclosure.

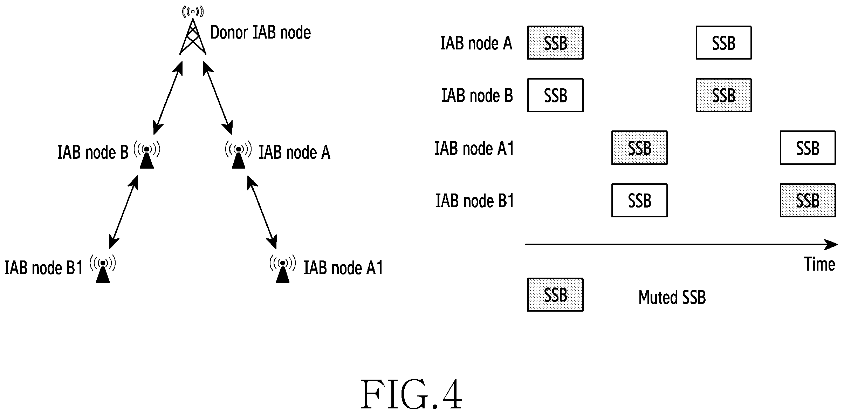

FIG. 4 shows a further a muting scheme based on hop order, according to an embodiment of the disclosure.

Embodiments of the disclosure provide several means by which the problems identified in the prior art may be addressed. Details of these follow. In the following, reference is made to solutions 1-A and 1-B to conform to the terminology used in the standardization process.

### Solution 1-A

For solution 1-A, the same set of SSBs will be used for both access UEs and inter IAB node discovery. In such a case, a mechanism is needed to make sure that one IAB node can hear from another IAB node subject to half-duplex constraint. In such a case, a muting pattern or scheme is needed and the following two alternatives may be used.
Alt1: muting pattern in SSB burst set level;
Alt2: muting pattern in SSB level within one SSB burst set.

### Alt1

For the SSB burst set level muting, an entire SSB burst set needs to be muted to listen to SSB from other IAB nodes, causing a significant impact on access UEs. However, it has been agreed that the impact on Rel-15 UE should be minimized so that such muting may not be optimal for access UEs. On the contrary, within one SSB burst set, the positions of SSB from multiple IAB nodes may be coordinated to enable inter node discovery subject to the half-duplex constraint.

### Alt2

Within each SSB burst set, there are multiple positions to transmit SSBs. However, the SSB positions are only possible positions. In other words, it is not mandated that an SSB should be transmitted in all the possible locations. Anything from a single SSB up to maximum number of SSBs within one SSB burst set is possible depending on beam sweeping requirements.

In such a case, one IAB node A can transmit on one subset of all possible positions and another IAB node B can transmit on another subset, not overlapping with subset of IAB node A as shown in Figure 1. The dashed boxes indicate the muted SSB transmission positions without actual SSB transmission. Both IAB node A and B can use these muted SSBs to listen to each other. This can be done via ssb-PositionsInBurst in SIB1. Different SSB subsets might need to be chosen for different SSB burst set to measure all possible beam directions. In other words, the scheme shown in Figure 1, where node A transmits on odd positions and node B transmits on even positions, is only exemplary and other muting schemes can be used as required.

In this regard, each IAB node needs to choose a subset within one SSB burst set and this can be done either in semi-persistent (via RRC) or dynamic (via download control information (DCI)) manner. Two further alternatives are possible:
- Alt2.1: centralized configuration, where the donor IAB node or the parent IAB node configure a different subset for all child IAB nodes or only its next level child IAB nodes;
- Alt2.2: distributed configuration, where each IAB node exchanges its own SSB configuration with its surrounding IAB nodes and the surrounding IAB nodes adjust their SSB configuration to choose a different SSB subset.

### Solution 1-B

For solution 1-B, SSBs which are orthogonal (TDM and/or FDM) with SSBs for access UEs are used for inter IAB node discovery so that there is no impact on access UE. Subject to half-duplex constraint, each IAB node might need to mute some of its own SSBs to listen to SSBs from other IAB nodes. Orthogonal resources for backhaul and access link detection and measurement can be achieved via SSB muting across IAB nodes. During those muted SSBs, IAB nodes can listen to SSBs from other IAB nodes to detect potential candidate backhaul links. However, it should be noted that such muting is only needed when the SSB transmissions are aligned for those IAB nodes that require measurement of SSBs to monitor the quality of backup backhaul links between each other. In particular, IAB nodes within the same hop could align their SSB transmissions to optimize the signaling overhead. However, between different hops, other reference signals and more flexible measurement can be considered.

In order to introduce muting pattern, two alternatives are presented:
Alt1: Muting across all IAB nodes;
Alt2: Muting based on hop order, i.e., muting pattern within each hop.

### Alt1

The first solution is illustrated in Figure 2 (tree and muting). The muting is across all IAB nodes no matter which hop they belong to. The benefit of such configuration is that one IAB node can always measure all possible backhaul links including both primary and backup ones and it is independent of topology change. However, the scalability of such configuration may be limited since it requires higher signaling overhead, scaling with total number of IAB nodes involved in inter IAB node SSB measurement.

### Alt2

The second solution is shown in Figure 3, where the muting is constrained between IAB nodes belonging to the same hop (i.e. the same number of node connections away from the Donor node). In such a case, two alternatives can be considered:
Alt2.1: the SSB transmission are aligned across all IAB nodes; and
Alt2.2: the SSB transmission are aligned across IAB nodes belonging to the same hop only.

### Alt2.1

One IAB node can measure all backup backhaul links via SSBs, irrelevant of hop order. Such a configuration can reduce the signaling overhead since the required number of SSBs is equal to the total number of IAB nodes involved in inter IAB node SSB measurement with in each hop. Therefore, the scalability of this approach is improved compared with the first solution.

### Alt2.2

One IAB node might not be able to measure the SSBs from other IAB nodes belonging to a different hop. However, as mentioned above, such a measurement is not necessarily based on SSBs only but may use other reference signals, e.g., CSI-RS/ ZP CSI-RS, since half-duplex constraint does not limit IAB nodes with hop order N and N+1. Allowing non-overlapping SSBs between different hops as shown in Figure 4 may improve resource allocation flexibility and thus achieve higher resource usage efficiency. It should be noted that the configuration of SSBs depends on topology and any topology change might incur re-configuration of SSBs as discussed in the following.

As mentioned above, for Alt1, the configuration of SSBs, e.g., number of SSBs within one measurement cycle, depends on the total number of IAB nodes involved in inter-IAB node discovery and measurement. Any topology change does not have an impact on this number.

However, for Alt2, the total number of SSBs within one measurement cycle is equal to the maximum number of IAB nodes involved in inter-IAB node discovery and measurement belonging to the same hop so any topology change here has an impact on the configuration of SSBs. In order to support more dynamic topology change, at least semi-persistent configuration/reconfiguration of SSBs, e.g., via RRC, for inter-IAB node discovery and measurement is supported and dynamic configuration may also be considered, as required.

For solution 1-B, the orthogonality can be achieved as follows:
TDM only: in such a case, access UE might detect inter-node discovery SSB, which might not include SIB1 information since only signal strength measurement is needed.
Altl: Same SSB transmission timing across all IAB nodes which leads to the same SSB configuration for all IAB nodes without flexibility
Alt2: Different SSB transmission timing across different IAB nodes so that different configurations can be applied to different IAB nodes but a common SMTC can be configured. For example, SSB offset can be defined based on hop order, which can be implicitly derived by IAB nodes.

TDM + FDM: in such a case, access UE does not detect inter-node discovery.

Embodiments of the disclosure provide different SMTC configuration in certain circumstances. A different SMTC orthogonal to access UE SMTC may be configured for IAB nodes to measure the SSBs. For connected state, two SMTCs can be configured and the second one has a different periodicity only. In order to configure this additional SMTC for IAB inter-node discovery, based on the current agreements, the following alternatives can be considered:
Alt 1: Additional offset values is needed for SMTC2
Alt 2: SMTC3 can be configured.

For idle state, only one SMTC should be configured. However, for inter-node discovery, at least two SMTCs should be configured for both connected and idle state. In this regard, it is necessary to allow two SMTCs to be configured in idle state.

The SMTC configuration should take the SSB configurations mentioned previously into consideration to enable semi-persistent and dynamic measurement supporting dynamic topology change. In this regard, SMTC configuration needs to support both semi-persistent and dynamic configuration.

For a measurement metric, RSRP/RSSI/SINR/RSRQ can be used and reported. Two alternatives can be considered for reporting measurement results:
Altl: report back to the parent IAB node and then to the donor IAB node so that the donor IAB node can collect all information and choose appropriate backup backhaul links once the primary backhaul links fails;
Alt2: report back to the IAB node which is transmitting SSB so that each IAB node knows which backup backhaul links to use once the primary backhaul links fail.

The composition of inter IAB node discovery SSB may require modification. In the Physical Broadcast Channel (PBCH) of an SSB, Master Information Block (MIB) is carried to the UEs in order to acquire the remaining system information broadcast by the network. Some of this information might not be needed since discovery SSB is mainly used to measure backup link quality, which can be based on signal strength measurement in terms of RSRP, and there is no need to actually know any further details. Therefore, the size of PBCH within an inter IAB node discovery SSB can be made smaller to reduce signaling overhead. The following alternatives can be considered:
Altl: Remove PBCH from SSB so that SSB only consists of Primary synchronization signal (PSS) and Secondary synchronization signal (SSS);
Alt2: Reduce the size of PBCH so it only includes certain necessary information, e.g., CellBarred Flag;
Alt3: Only keep DMRS of PBCH for measurement, the rest of the REs for MIB can either be removed or muted to save energy.

For both alternatives, the length of PSS and SSS can be increased so that a lower SINR can be achieved for initial access, which is needed since the distance between IAB nodes is normally larger than that between an IAB node and a UE.

Once a backhaul link of an IAB node is blocked and a backup backhaul link is needed, an Out of Synchronization (OOS) event happens and the IAB node needs to perform synchronization again. There are two alternative approaches possible:
Alt1: IAB node can use the inter-node discovery SSBs orthogonal to the initial access SSBs for backup backhaul link initial access and synchronization;
Alt2: IAB node can use the initial access SSBs directly for backup backhaul link initial access and synchronization.

For the second alternative, the IAB node needs to do synchronization again as if it is accessing the network for the first time, i.e., it follows the stage 1 procedure.

The SSBs discussed above are for inter-node discovery and measurement. In the following, SSB configuration for IAB node MT initial access is described.

Both NSA and SA cases are considered. Two cases can be considered for an NSA deployment:
Case 1: The IAB node MT can perform initial access on an LTE carrier so that the NSA deployment is from both access UE and IAB node Mobile Terminal (MT) perspectives;
Case 2: The IAB node MT can only perform initial access on a NR carrier so that the NSA deployment is only from an access UE perspective.

For case 1, since IAB node MT has already synchronized with donor 5G base station (gNB) on a LTE carrier via an LTE Primary Cell (PCell) and the NR frequency carrier can be further added via the EN-DC procedure, a longer periodicity for IAB node MT initial access can be assumed to reduce power consumption as well as the signaling overhead and such periodicity can be signaled via the established link on a LTE carrier using e.g., RRC.

For case 2, the IAB node MT needs to perform initial access on a NR carrier without any previously established LTE links so that periodicity signaling as in case 1 is impossible, i.e., no assumptions at the network side can be made. The IAB node MT needs to assume SSB periodicity for initial access. Three alternatives can be considered as follows:
Alt1: The IAB node MT assumes the same SSB periodicity as access UE, i.e., 20 ms.
Alt2: The IAB node MT assumes longer SSB periodicity than access UE, i.e., a value from 40 ms, 80 ms and 160 ms.
Alt3: The IAB node MT can assume the same SSB periodicity as access UE when accessing the network for the first time and then assumes longer periodicity, which can be configured by the donor or parent IAB nodes, when accessing the network the second time and onward, e.g. when OOS happens.

In order to support Alt2 and Alt3, the IAB node MT needs to know it is IAB node but not a normal access UE. Such information needs to be configured to the IAB nodes even before it is activated and made available once the IAB node is activated. It can be a Boolean indicator with two initial configuration states e.g.: "0" means the current device is access UE device and "1" means the current device is IAB node. With such information, the IAB node MT knows it should assume a different SSB periodicity.

It should be noted that when a longer periodicity is assumed by IAB node MT on NR carrier, an access UE assumes the original periodicity, e.g., 20 ms.

At least some of the example embodiments described herein may be constructed, partially or wholly, using dedicated special-purpose hardware. Terms such as 'component', 'module' or 'unit' used herein may include, but are not limited to, a hardware device, such as circuitry in the form of discrete or integrated components, a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements. Various combinations of optional features have been described herein, and it will be appreciated that described features may be combined in any suitable combination. In particular, the features of any one example embodiment may be combined with features of any other embodiment, as appropriate, except where such combinations are mutually exclusive. Throughout this specification, the term "comprising" or "comprises" means including the component(s) specified but not to the exclusion of the presence of others.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

While the disclosure has been shown and described with reference to various embodiments thereof, it will be understood by those skilled in the art that various changes in form and details may be made therein without departing from the spirit and scope of the disclosure as defined by the appended claims and their equivalents.

## Claims

1. A method performed by a node in a telecommunication network, the node being operable to perform integrated access and backhaul (IAB), the method comprising:
selectively muting one or more synchronization signal block (SSB), transmissions; and
during the muting, monitoring an SSB transmission from another node.

2. The method of claim 1, wherein the one or more SSB transmissions are selectively muted on at least one of an individual SSB basis or a burst set basis.

3. The method of claim 1, wherein the one or more SSB transmissions are selectively muted in a complementary manner between the node and another node.

4. The method of claim 1, wherein the node and one or more neighboring nodes of the telecommunication system exchange SSB configuration information and adjust their SSB configurations accordingly.

5. The method of claim 1, wherein a donor or parent node of the telecommunication network provides an SSB configuration for all child nodes of the donor or parent node or for all next-level child nodes of the donor or parent node.

6. The method of claim 1, wherein the one or more SSB transmissions are selectively muted in the node in a collaborative manner between the node and any connected nodes.

7. The method of claim 1, wherein the one or more SSB transmissions are selectively muted in the node in a collaborative manner only between the node and other nodes in a same hop as the node.

8. The method of claim 1,
wherein the one or more SSB transmissions are selectively muted based on a node topology and can be configured or reconfigured in a semi-persistent manner by upper layer signaling or in a dynamic manner.

9. The method of claim 1, wherein an SSB-based radio resource management (RRM) measurement timing configuration (SMTC) orthogonal to an access User Equipment SMTC (UE SMTC) is provided to allow the node to measure an SSB transmission of a neighboring node such that an additional SMTC is configured in both Radio Resource Control (RRC)-connected and RRCidle states.

10. The method of claim 1, wherein at least some of information included in a Physical Broadcast Channel (PBCH) is removed or muted from the one or more SSB transmissions.

11. The method of claim 1, wherein the node assumes an SSB configuration and an SSB measurement periodicity different from those assumed when accessing the telecommunication network for a first time.

12. The method of claim 1, wherein the node is operable to perform the IAB with a state indicator to differentiate an IAB mobile terminal from an access user equipment (UE).

13. An apparatus of a node in a telecommunication network, the node is operable to perform integrated access and backhaul (IAB), the apparatus comprising:
at least one processor configured to:
selectively mute one or more synchronization signal block (SSB), transmissions, and
during the muting, monitor an SSB transmission from another node.

14. The apparatus of claim 13, wherein the at least one processor is configured to selectively mute the one or more SSB transmissions on at least one of an individual SSB basis or a burst set basis.

15. The apparatus of claim 13, wherein the at least one processor is configured to selectively mute the one or more SSB transmissions in a complementary manner between the node and another node.
